# EUROPÄISCHE PATENTSCHRIFT

(11) **EP 2 862 612 B1**
(45) Veröffentlichungstag und Bekanntmachung des Hinweises auf die Patenterteilung: **02.10.2019**
(21) Anmeldenummer: 14182436.7
(22) Anmeldetag: 27.08.2014
(51) Int. Cl.: B01D 46/00, B01D 46/24

(54) **Filtersystem mit Stützrohr**
Filter system with a supporting tube
Système de filtre équipé d'un tube support

(30) Priorität: 02.09.2013 DE 102013014493
(43) Veröffentlichungstag der Anmeldung: 22.04.2015
(73) Patentinhaber: MANN + HUMMEL GMBH, 71636 Ludwigsburg (DE)
(72) Erfinder: Kaufmann, Michael, 67149 Meckenheim (DE); Ruhland, Klaus-Dieter, 67149 Meckenheim (DE); Oelpke, Reinhard, 17207 Röbel/Müritz (DE)

(56) Entgegenhaltungen:
- EP-A1- 2 742 986
- WO-A1-2012/172019
- WO-A2-2008/045326
- DE-A1- 19 502 020
- DE-A1- 19 519 438

## Beschreibung

### Technisches Gebiet

Die Erfindung betrifft ein Filtersystem mit einem Stützrohr zur Aufnahme eines austauschbaren Filterelements, insbesondere zur Verwendung als Luftfilter einer Brennkraftmaschine.

### Stand der Technik

Aus der WO 2008/045326 A2 ist ein Luftfiltersystem bekannt, das als Teil des Filtersystemgehäuses über ein Stützrohr verfügt, das eine geschlossene Endscheibe aufweist. Das Stützrohr trägt das Filterelement und verhindert ein Verdrehen des Filterelements während des Betriebs des Filtersystems. Das Stützrohr ist über Haltenasen, welche in Öffnungen des Gehäuses greifen, mit diesem über eine Schnappverbindung verbunden. Wenn die Haltenasen in die Öffnungen eingeschnappt sind, kann das Stützrohr als Teil des Gehäuses betrachtet werden. So ist es möglich, das Stützrohr zur Aufnahme des Filterelements zu verwenden, das dadurch verdrehungssicher angeordnet ist. Das Stützrohr kann nach Abnahme des Filterelements aus dieser Schnappverbindung, beispielsweise durch Verkippen des Stützrohrs gegen das Gehäuse, wieder gelöst werden, was bei einem Tausch des Filterelements absichtlich oder unabsichtlich möglich ist.

Eine Aufgabe der Erfindung ist es daher, ein Filtersystem mit einem Stützrohr zu schaffen, bei dem das Stützrohr auf einfache und kostengünstige Art fest und verdrehsicher mit dem Gehäuse verbunden ist.

Die vorgenannten Aufgaben werden nach einem Aspekt der Erfindung gelöst mit einem Filtersystem nach Anspruch 1.

Günstige Ausgestaltungen und Vorteile der Erfindung ergeben sich aus den weiteren Ansprüchen, der Beschreibung und der Zeichnung.

### Offenbarung der Erfindung

Es wird ein Filtersystem vorgeschlagen, wobei das Filtersystem ein Gehäuse mit Gehäusewand und wenigstens einem Deckel, einen am Gehäuse angeordneten Einlassstutzen zum Zuführen eines zu filternden Fluids, insbesondere Luft, einen am Gehäuse angeordneten Auslassstutzen zur Ableitung des gefilterten Fluids, sowie ein im Inneren des Gehäuses angeordnetes Stützrohr zur Aufnahme eines Filterelements umfasst. Dabei erstreckt sich das Stützrohr entlang einer Gehäuseachse und ist über eine Rastverbindung an einer Aufnahmeseite mit dem Gehäuse bezogen auf die Gehäuseachse winkelgerichtet nur in einer Winkelrichtung montierbar verbunden.

Die erfindungsgemäße Lösung weist gegenüber dem Stand der Technik den Vorteil auf, dass die Rastverbindung eine feste, d.h. nicht zerstörungsfrei lösbare, und gleichzeitig verdrehungssichere Anordnung eines Stützelements im Gehäuse eines Filtersystems ermöglicht. Weiter ist auch eine winkelgerichtete Kopplung zwischen dem gehäusefesten Stützrohr und dem Gehäuse, als auch zwischen einem Sekundärelement und dem gehäusefesten Stützrohr als weitere Ausführungsform denkbar.

Ein versehentliches Entnehmen des Stützrohres beim Tausch von Filterelementen ist im Gegensatz zu einer lösbaren Verbindung ohne Zerstörung des Bauteils nicht möglich. Auch ein Verdrehen des Stützrohres bei Schwingungsanregungen, beispielsweise während des Betriebs an einer Brennkraftmaschine in einem Kraftfahrzeug, ist aufgrund des Verdrehschutzes nicht möglich.

Eine winkelgerichtete Kopplung sowohl zwischen dem Gehäuse und dem Stützrohr als auch zwischen einem Sekundärelement und dem Stützrohr kann vorgesehen werden, wodurch eine eindeutige Lage dieser drei Bauteile Gehäuse, Stützrohr und Sekundärelement zueinander gewährleistet wird. Dadurch kann insbesondere die Qualität des Signals eines Luftmassensensors wie beispielsweise eines Heißfilmluftmassenmessers (HFM), im Reinluftbereich des Filtersystems durch das gleichbleibende Strömungsfeld im Reinluftbereich, welches sonst durch eine veränderte Geometrie der relativen Positionen von Gehäuse, Stützrohr und/oder Sekundärelement zueinander beeinflusst werden kann, verbessert werden. Typischerweise werden Messungen mit HFM-Sensoren sehr nahe am Auslass eines Filtersystems durchgeführt, sodass die Messungen durch ein unterschiedliches Strömungsfeld stark beeinflusst werden können. Wenn nun strukturelle Bauteile eines Filtersystems wie Stützrohr und/oder Sekundärelement, die üblicherweise nicht völlig rotationssymmetrisch aufgebaut sind, beispielsweise durch Nähte von Filtermedien, Versteifungsrippen und dergleichen, in unterschiedlichen Winkellagen verbaut, so kann das daraus resultierende Strömungsfeld unterschiedlich geartet sein und damit die Messung des HFM-Sensors beeinflussen.

Erfindungsgemäß ist die Rastverbindung aus korrespondierenden Rastelementen am Gehäuse und am Stützrohr gebildet und die Rastelemente so ausgeführt, dass jeweils korrespondierende Rastelemente nur auf eine festgelegte Weise miteinander verrastet werden können. Auf diese Weise ist eine eindeutige Zuordnung von Stützrohr und Gehäuse möglich, sodass die Gefahr, dass falsche Teile bei der Montage verwendet werden, minimiert wird.

Besonders vorteilhaft kann sich auswirken, dass die Rastverbindung nicht zerstörungsfrei lösbar ausgeführt ist. Dadurch ist eine Manipulation oder Fehlbedienung beispielsweise beim Tausch eines Filterelements an dem Filtersystem leicht zu erkennen. Auch wird durch die Notwendigkeit, höhere Kräfte aufzuwenden, die Wahrscheinlichkeit eines versehentlichen Entfernens des Stützrohrs reduziert, wodurch eine versehentliche Verschmutzung des Reinluftbereichs beim Filterelementwechsel reduziert wird.

In einer zweckmäßigen Ausführungsform können als Teil der Rastverbindung ein wenigstens segmentweise ausgebildeter umlaufender Bund und wenigstens eine zum Bund gerichtete Haltenase vorgesehen sein. Durch das Zusammenwirken von Haltenase und umlaufendem Bund mit den jeweils korrespondierenden Rastelementen des jeweiligen anderen an der Rastverbindung beteiligten Bauteils, wie Gehäuse und/oder Stützrohr, kann eine sichere Verbindung zwischen Stützrohr und Gehäuse hergestellt werden.

Vorteilhaft kann dabei die Haltenase eine Haltefläche aufweisen, welche senkrecht zu der Gehäuseachse angeordnet ist. Dadurch ist eine relativ hohe Kraft nötig, um die Haltenase aus einer Rastposition wieder zu lösen und es ist möglich, eine zuverlässige Verbindung zwischen den beteiligten Bauteilen darzustellen. Die Haltenasen weisen günstigerweise Einführschrägen auf, sodass sie leicht über ihr korrespondierendes Rastelement geführt werden können. Durch die senkrechte Anordnung der Halteflächen ist aber ein zerstörungsfreies Lösen der verrasteten Verbindung nicht mehr möglich.

Günstigerweise kann das Gehäuse als Teil der Rastverbindung auf einem wenigstens segmentweise ausgebildeten umlaufenden Bund wenigstens eine nach innen gerichtete Haltenase mit einer Haltefläche aufweisen, welche senkrecht zu der Gehäuseachse angeordnet ist. Durch das Verrasten der Haltenase mit einer Haltenase und einem umlaufenden Bund des Stützrohrs kann eine sichere Verbindung zwischen Stützrohr und Gehäuse hergestellt werden.

Als dazu korrespondierendes Rastelement kann das Stützrohr als Teil der Rastverbindung auf einem umlaufenden Bund eine nach außen gerichtete Haltenase mit einer Haltefläche aufweisen, welche senkrecht zu der Gehäuseachse angeordnet ist und wobei das Stützrohr ein Sicherungselement aufweist, wodurch ein Sichern der Rastverbindung gegen Lösen bewirkbar ist. Durch das Verrasten der Haltenase mit einer Haltenase und einem umlaufenden Bund des Gehäuses kann eine sichere Verbindung zwischen Stützrohr und Gehäuse hergestellt werden, die außerdem noch gegen unbeabsichtigtes Lösen durch ein Sicherungselement gesichert ist.

In einer alternativen Ausführungsform können die Rastelemente von Gehäuse und Stützrohr spiegelbildlich ausgeführt sein, sodass das Stützrohr als Teil der Rastverbindung auf einem umlaufenden Bund wenigstens eine nach innen gerichtete Haltenase mit einer Haltefläche aufweist, welche senkrecht zu der Gehäuseachse angeordnet ist.

Dazu korrespondierend kann das Gehäuse als Teil der Rastverbindung auf einem umlaufenden Bund eine nach außen gerichtete Haltenase mit einer Haltefläche aufweisen, welche senkrecht zu der Gehäuseachse angeordnet ist und weiter kann das Gehäuse ein Sicherungselement aufweisen, wodurch ein Sichern der Rastverbindung gegen Lösen bewirkbar ist. Diese Ausführungsform der Rastverbindung funktioniert auf genau die gleiche Weise wie die zuvor beschriebene und weist lediglich vertauschte korrespondierende Rastelemente auf.

Vorteilhaft kann bei der erfindungsgemäßen Lösung das Stützrohr bezogen auf die Gehäuseachse axial winkelgerichtet montierbar sein. Die Rastelemente können so ausgeführt sein, dass jeweils korrespondierende Rastelemente nur auf eine festgelegte Weise miteinander verrastet werden können, beispielsweise durch unterschiedliche Abstände der Rastelemente auf einem umlaufenden Bund, und so nur in einer Winkelrichtung montiert werden können. Dadurch ist das Stützrohr nach dem so genannten Poka Yoke-Prinzip nur in einer festen und immer gleichen Position in dem Gehäuse montierbar.

In einer günstigen Ausgestaltung kann wenigstens ein Ausrichtelement an der Aufnahmeseite des Stützrohrs angeordnet sein und ein Gegenelement an dem Gehäuse angeordnet sein, wodurch ein Verdrehschutz des im Gehäuse montierten Stützrohrs darstellbar ist. Durch ein solches Ausrichtelement, beispielsweise eine Rippe, das nur mit seinem entsprechenden Gegenelement, beispielsweise einer Nut, korrespondiert, kann eine feste winkelgerechte Montage des Stützrohrs realisiert werden. Das Stützrohr lässt sich so nach dem Poka Yoke-Prinzip nur in einer Lage verbauen. Außerdem lässt sich das Stützrohr in seiner Einbaulage nicht mehr verdrehen. Wenn das Ausrichtelement nicht in sein korrespondierendes Gegenelement eingreift, so kann beispielsweise das Stützrohr nicht in der Rastverbindung verrasten. Auf diese Weise lässt sich die Montage in einer definierten Winkelposition absichern.

Zusätzlich kann der Verdrehschutz weiter durch das Verzahnen von Rippen an der Aufnahmeseite des Stützrohrs mit Stegen am Bund der Gehäusewand realisiert werden, indem die Rippen beim Einschieben und Verrasten des Stützrohrs im Gehäuse zwischen die Stege des Gehäuses greifen und so gegen Verdrehen geschützt sind.

In einer vorteilhaften Ausführungsform kann im Inneren des Stützrohres ein Sekundärelement angeordnet sein und das Sekundärelement sich entlang der Gehäuseachse erstrecken und über eine Rastverbindung mit dem Stützrohr und/oder Gehäuse verbindbar sein. Das Sekundärelement kann beispielsweise mit einer ähnlichen Rastverbindung wie das Stützrohr mit dem Gehäuse mit dem Stützrohr selbst verbunden werden und so ebenfalls leicht und sicher montierbar ausgeführt werden. Dabei kann auf das Sicherungselement verzichtet werden, wenn das Sekundärelement bei Wartungsprozessen tauschbar ausgeführt sein soll.

Durch die Anbringung des Sekundärelements im Inneren des Stützrohrs kann das Sekundärelement davor bewahrt werden, im Wartungsfall bei Abnehmen des Filterelements mit herauszufallen oder unabsichtlich mit herausgezogen zu werden. Auf diese Weise ist Reinluftbereich des Luftführungssystems einer Brennkraftmaschine gegen Verschmutzung bei Wechsel des Filterelements geschützt.

Günstigerweise kann das Sekundärelement bezogen auf die Gehäuseachse und/oder das Stützrohr axial winkelgerichtet montierbar sein. Durch entsprechende Ausführung der Rastelemente mit unterschiedlichen Abständen kann auch bei dem Sekundärelement erreicht werden, dass es nur in einer festen Winkelposition montierbar ist. Das Sekundärelement lässt sich so nach dem Poka Yoke-Prinzip nur in einer Lage verbauen.

In einer vorteilhaften Weiterbildung ist das Sekundärelement bezogen auf die Gehäuseachse und/oder das Stützrohr winkelgerichtet montierbar. Dazu kann ein Ausrichtelement an einer Aufnahmeseite des Sekundärelements angeordnet sein und ein Gegenelement an dem Stützrohr angeordnet sein, wodurch ein Verdrehschutz des im Gehäuse und/oder in dem Stützrohr montierten Sekundärelements darstellbar ist.

Vorteilhaft kann wenigstens ein Ausrichtelement an einer Aufnahmeseite des Sekundärelements angeordnet sein und ein Gegenelement an dem Stützrohr angeordnet sein, wodurch ein Verdrehschutz des im Gehäuse und/oder in dem Stützrohr montierten Sekundärelements darstellbar ist. Durch ein solches Ausrichtelement, das nur mit seinem entsprechenden Gegenelement korrespondiert, kann eine feste winkelgerechte Montage des Sekundärelements realisiert werden. Außerdem lässt sich das Sekundärelement in seiner Einbaulage nicht mehr verdrehen. Wenn das Ausrichtelement nicht in sein korrespondierendes Gegenelement eingreift, so kann beispielsweise der Deckel des Filtersystems nicht geschlossen werden, da das Sekundärelement auf den Deckel drückt. Auf diese Weise lässt sich die Montage in einer definierten Winkelposition absichern. Die in den vorigen fünf Absätzen beschriebenen Ausführungsformen stellen auch in Verbindung mit einem gehäusefesten Stützrohr, das mit dem Gehäuse einstückig und materialeinheitlich durch einen einzigen Spritzgussvorgang oder eine Verschweißung oder Verklebung mit dem Gehäuse verbunden ist, eine eigenständige Erfindung dar, für die hier Schutz beansprucht wird.

Die Erfindung betrifft somit auch ein Filtersystem, umfassend ein Gehäuse mit Gehäusewand und wenigstens einem Deckel, einen am Gehäuse angeordneten Einlassstutzen zum Zuführen eines zu filternden Fluids, insbesondere Luft, einen am Gehäuse angeordneten Auslassstutzen zur Ableitung des gefilterten Fluids, ein im Inneren des Gehäuses angeordnetes Stützrohr zur Aufnahme eines Filterelements,
wobei das Stützrohr sich entlang einer Gehäuseachse erstreckt und mit dem Gehäuse verbunden ist, wobei im Inneren des Stützrohrs ein Sekundärelement angeordnet ist und wobei das Sekundärelement sich entlang der Gehäuseachse erstreckt und über eine Rastverbindung mit dem Stützrohr und/oder Gehäuse verbindbar ist. Das Filtersystem kann ebenfalls vorteilhaft mindestens eines der vorstehend oder nachstehend beschriebenen vorteilhaften Merkmale aufweisen.

Die Erfindung betrifft ferner ein Sekundärelement zur Verwendung in einem Filtersystem nach einem der vorhergehenden Ansprüche, wobei das Sekundärelement sich entlang der Gehäuseachse erstreckt und einen gitterrohrförmigen Stützkörper sowie ein den Stützkörper ringförmig umschließendes Filtermedium mit in einem Nahtbereich miteinander verbundenen Endkanten umfasst.

In einer vorteilhaften Ausführung eines Sekundärelementes sind die Endkanten in einem Nahtbereich mittels einer Ultraschallschweißnaht, einer Klebespur, einer Metallklammer oder anderen Mitteln miteinander verbunden, so dass ein ringförmig geschlossener Filterkörper gebildet ist. Der Nahtbereich ist dabei bevorzugt radial außerhalb, bevorzugt direkt auf einer insbesondere durchgehenden Längsrippe des Stützkörpers angeordnet.

In einer weiteren vorteilhaften Ausgestaltung weist das Sekundärelement Rastmittel zur Bildung einer Rastverbindung mit dem Stützrohr und/oder Gehäuse auf.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: eine perspektivische Ansicht eines zweistufigen Filtersystems mit einem Zyklonabscheider nach einem Ausführungsbeispiel der Erfindung;
- Fig. 2: ein Längsschnitt des Filtersystems von Fig. 1 mit eingesetztem Stützrohr;
- Fig. 3: eine Detailansicht der Rastverbindung zwischen Stützrohr und Gehäuse nach einem Ausführungsbeispiel der Erfindung;
- Fig. 4: eine Detailansicht der Rastelemente des Gehäuses nach einem Ausführungsbeispiel der Erfindung;
- Fig. 5: eine perspektivische Ansicht der Rastelemente des Gehäuses nach einem Ausführungsbeispiel der Erfindung;
- Fig. 6: ein Stützrohr mit Rastelementen nach einem Ausführungsbeispiel der Erfindung;
- Fig. 7: eine perspektivische Ansicht der Rastelemente des Gehäuses nach einem Ausführungsbeispiel der Erfindung;
- Fig. 8: eine Detailansicht der Rastelemente des Gehäuses nach einem Ausführungsbeispiel der Erfindung;
- Fig. 9: ein Gehäuse eines Filtersystems mit abgenommenem Deckel und montiertem Stützrohr nach einem Ausführungsbeispiel der Erfindung;
- Fig. 10: ein Gehäuse eines Filtersystems mit abgenommenem Deckel und montiertem Stützrohr und Sekundärelement nach einem Ausführungsbeispiel der Erfindung;
- Fig. 11: ein Sekundärelement nach einem Ausführungsbeispiel der Erfindung;
- Fig. 12: ein Längsschnitt durch ein Gehäuse eines Filtersystems mit abgenommenem Deckel und montiertem Stützrohr und Sekundärelement nach einem Ausführungsbeispiel der Erfindung, und
- Fig. 13: ein Sekundärelement nach einem Ausführungsbeispiel der Erfindung.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

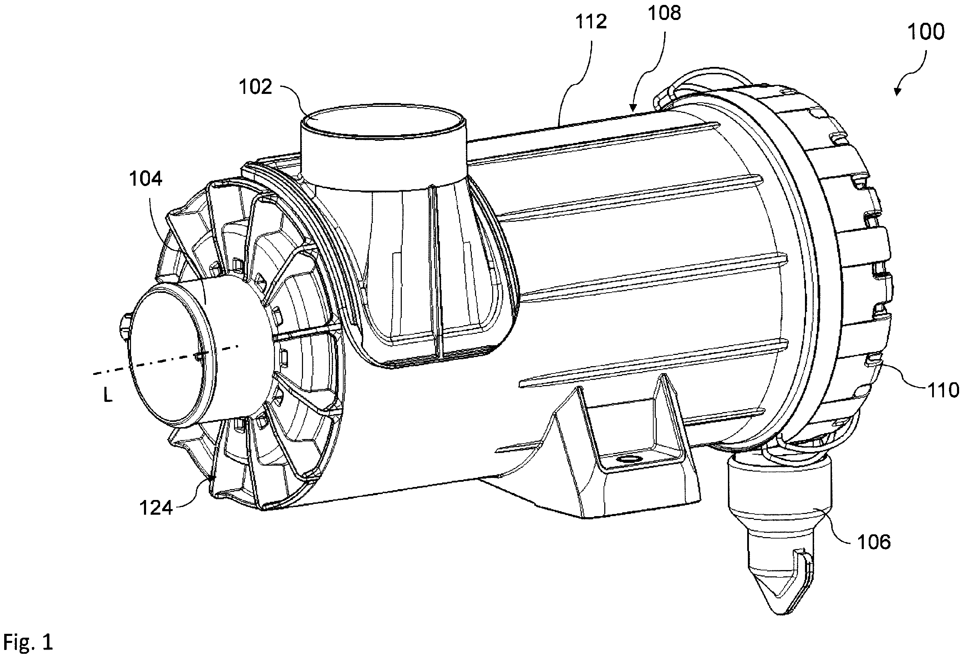

Figur 1 zeigt eine perspektivische Ansicht eines zweistufigen Filtersystems 100 mit einem Zyklonabscheider 50 nach einem Ausführungsbeispiel der Erfindung mit tangentialem Einlass 102, zentrischem Auslassstutzen 104 an einer Gehäusestirnseite 124 und bodenseitigem Schmutzauslass 106. Dargestellt ist eine Rundfilterbauform, die aus einem Gehäuse 108 besteht, das eine Gehäusewand 112 aufweist und mit einem Deckel 110, beispielsweise mit Schraub- oder Bajonettverschluss, verschlossen wird. Bei einer Verwendung als Luftfiltersystem strömt staubbeladene Luft in den Einlass 102, der tangential zum innen eingebauten Luftfilterelement angeordnet ist, sodass die Luft im Innern des Gehäuses 108 durch einen Anströmschutz am Filterelement in eine Rotationsbewegung versetzt wird. Filterelement und Anströmschutz sind in der Zeichnung nicht dargestellt. Durch den über die Rotationsbewegung der Luft bewirkten Zykloneffekt wirken Fliehkräfte auf die Staubpartikel der strömenden Luft, sodass diese sich teilweise an der Gehäusewand abscheiden und über den Schmutzauslass 106 aus dem Filtersystem 100 abströmen können. Dadurch wird das Filterelement weniger belastet, die Standzeit des Filterelements wird erhöht. Die gereinigte Luft kann über den zentrischen Auslass 104 aus dem Gehäuse 108 abgeführt werden.

Derartige Filtersysteme, wie in Figur 1 dargestellt, werden üblicherweise als Luft- und/oder Partikelfilter insbesondere für Brennkraftmaschinen im Baumaschinen- und Landmaschinenbereich eingesetzt. Sie zeichnen sich durch große Robustheit aus und weisen wegen der hohen Filterlast kurze Standzeiten auf. Ein Filtersystem 100 mit beladenem Filterelement muss dabei einen Gewichtszuwachs von 10 kg oder mehr tolerieren.

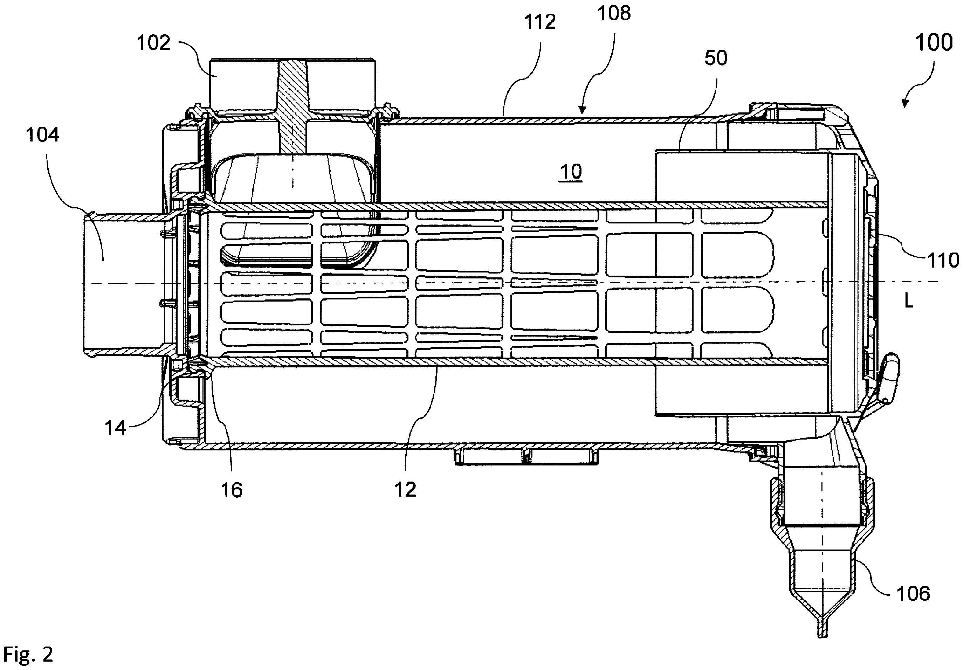

In Figur 2 ist ein Längsschnitt des Filtersystems 100 von Figur 1 mit eingesetztem Stützrohr 12 dargestellt. Das Filtersystem 100 umfasst ein Gehäuse 108 mit Gehäusewand 112 und einem Deckel 110, einen am Gehäuse 108 angeordneten Einlassstutzen 102 zum Zuführen eines zu filternden Fluids, insbesondere Luft, einen am Gehäuse 108 angeordneten Auslassstutzen 104 zur Ableitung des gefilterten Fluids, sowie ein im Inneren 10 des Gehäuses 108 angeordnetes Stützrohr 12 zur Aufnahme eines Filterelements. Dabei erstreckt sich das Stützrohr 12 entlang einer Gehäuseachse L und ist über eine Rastverbindung 14 an einer Aufnahmeseite 16 mit dem Gehäuse 108 verbunden.

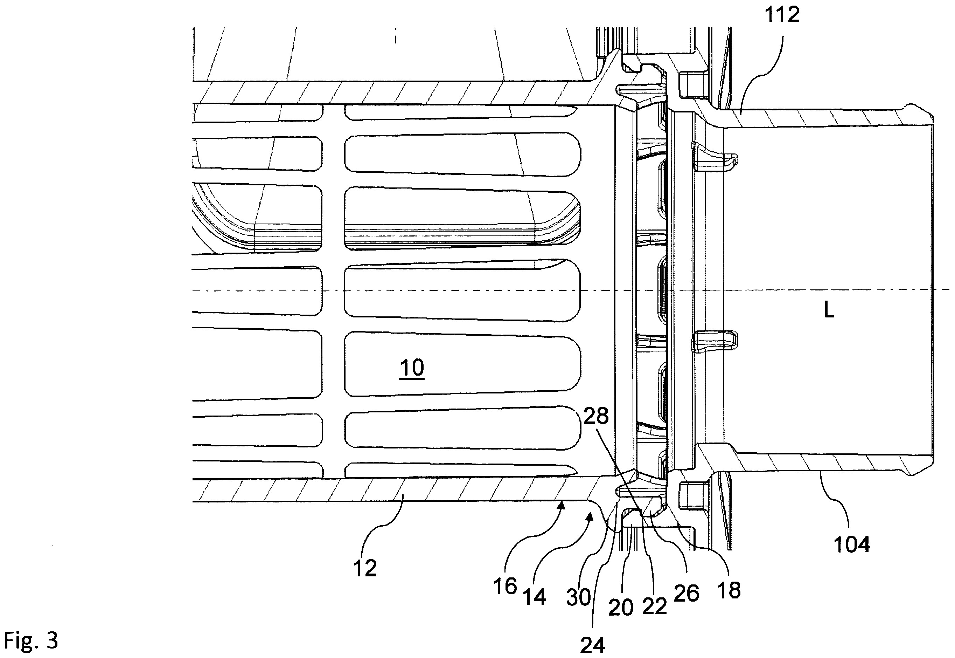

Figur 3 zeigt eine Detailansicht der Rastverbindung 14 zwischen Stützrohr 12 und Gehäuse 108 nach einem Ausführungsbeispiel der Erfindung, wobei die Rastverbindung 14 aus korrespondierenden Rastelementen 18, 20, 24, 26 am Gehäuse 108 und am Stützrohr 12 gebildet ist. Als Teil der Rastverbindung 14 ist ein wenigstens segmentweise ausgebildeter umlaufender Bund 18, 24 und wenigstens eine zum Bund 18, 24 gerichtete Haltenase 20, 26 vorgesehen. Die Haltenasen 20,26 weisen jeweils eine Haltefläche 22, 28 auf, welche senkrecht zu der Gehäuseachse L angeordnet ist. Das Gehäuse 108 weist dabei als Teil der Rastverbindung 14 auf einem wenigstens segmentweise ausgebildeten umlaufenden Bund 18 wenigstens eine nach innen gerichtete Haltenase 20 mit einer Haltefläche 22 auf, welche senkrecht zu der Gehäuseachse L angeordnet ist. Korrespondierend dazu weist das Stützrohr 12 als Teil der Rastverbindung 14 auf einem umlaufenden Bund 24 eine nach außen gerichtete Haltenase 26 mit einer Haltefläche 28 auf, welche senkrecht zu der Gehäuseachse L angeordnet ist. Weiter weist das Stützrohr 12 ein Sicherungselement 30 auf, wodurch ein Sichern der Rastverbindung 14 gegen Lösen bewirkbar ist. Eine derart ausgeführte Rastverbindung 14 ist nicht zerstörungsfrei lösbar, da das Sicherungselement 30 auf Grund der Haftreibung verhindert, dass die Haltenase 20 leicht nach außen gebogen werden kann.

In einer alternativen, aber nicht dargestellten Ausführungsform können die Rastelemente zwischen Gehäuse und Stützrohr vertauscht sein, sodass das Stützrohr 12 als Teil der Rastverbindung 14 auf einem umlaufenden Bund 18 wenigstens eine nach innen gerichtete Haltenase 20 mit einer Haltefläche 22 aufweist, welche senkrecht zu der Gehäuseachse L angeordnet ist. Dazu korrespondierend weist dann das Gehäuse 108 als Teil der Rastverbindung 14 auf einem umlaufenden Bund 24 eine nach außen gerichtete Haltenase 26 mit einer Haltefläche 28 auf, welche senkrecht zu der Gehäuseachse L angeordnet ist. Weiter weist das Gehäuse 108 dann ein Sicherungselement 30 auf, wodurch ein Sichern der Rastverbindung 14 gegen Lösen bewirkbar ist.

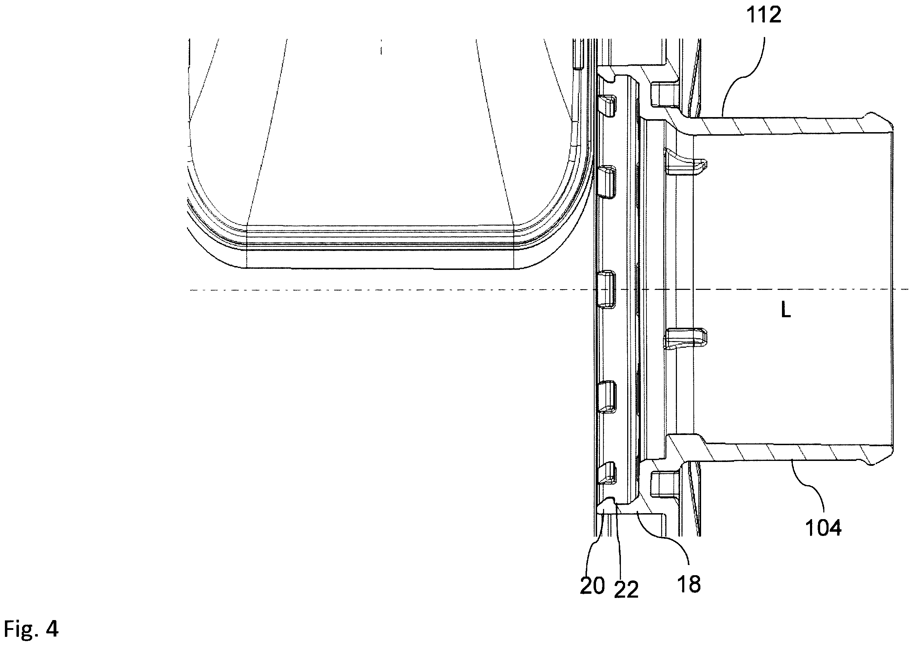

Figur 4 zeigt eine Detailansicht der Rastelemente 18, 20, 22 des Gehäuses 108 nach einem Ausführungsbeispiel der Erfindung. Dargestellt sind unmittelbar in der Nähe des Auslassstutzens 104 an der Gehäusewand 112 angebrachte Haltenasen 20 mit Halteflächen 22, die an einem umlaufenden Bund 18 angeordnet sind.

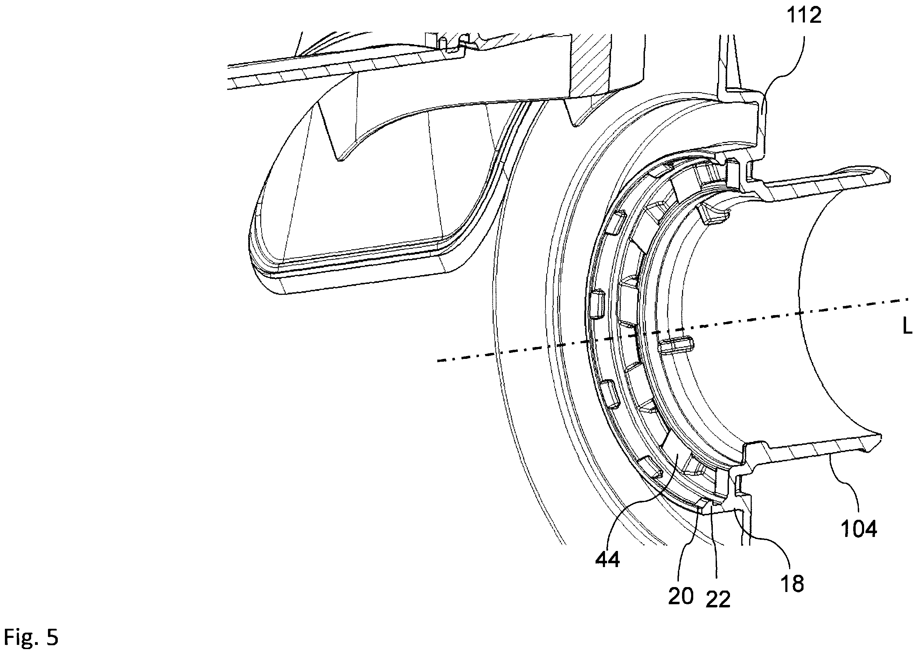

In Figur 5 ist dazu eine perspektivische Ansicht der Rastelemente 18, 20, 22 des Gehäuses 108 nach einem Ausführungsbeispiel der Erfindung dargestellt. So ist zu erkennen, dass die unmittelbar in der Nähe des Auslassstutzens 104 an der Gehäusewand 112 angebrachte Haltenasen 20 mit ihren Halteflächen 22 kreisförmig auf dem umlaufenden Bund 18 angeordnet sind. Am Bund 18 sind weiter Stege 44 angebracht, in welche Rippen 46 eines Stützrohrs 12 eingreifen können, um so einen zusätzlichen Verdrehschutz des eingebauten Stützrohrs 12 zu gewährleisten.

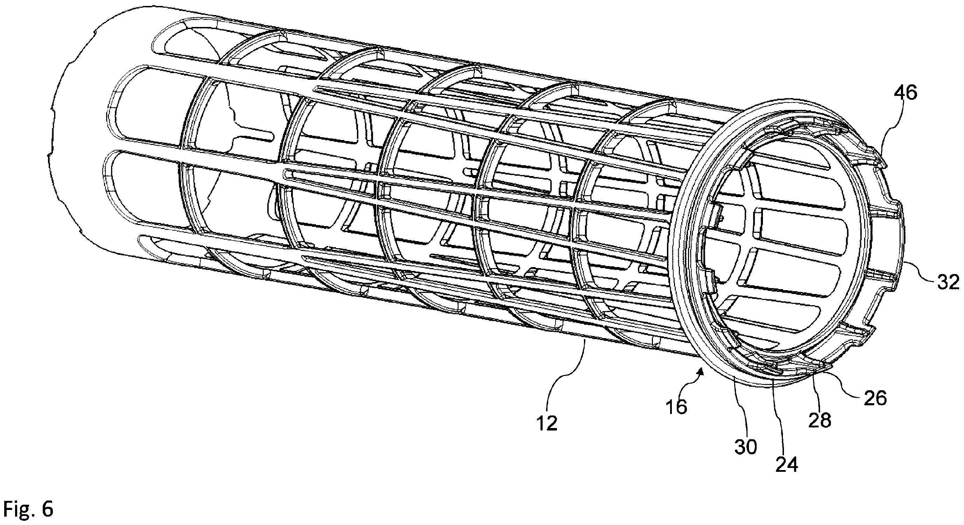

Figur 6 zeigt ein Stützrohr 12 mit den Rastelementen 24, 26, 28 sowie dem Sicherungselement 30 nach einem Ausführungsbeispiel der Erfindung. An der Aufnahmeseite 16 des Stützrohrs 12 sind auf dem umlaufenden Bund 24 Haltenasen 26 mit ihren Halteflächen 28 angeordnet. Unterhalb der Haltenase 26 liegt in einem Abstand das Sicherungselement 30 zum Sichern der Rastverbindung gegen unbeabsichtigtes Lösen. An dem aufnahmeseitigen Ende des Stützrohrs 12 ist ein Ausrichtelement 32 angeordnet, welches zur festen winkelgerichteten Montage des Stützrohrs 12 im Gehäuse 108 dient. Das Stützrohr 12 ist so bezogen auf die Gehäuseachse L axial winkelgerichtet montierbar. An der Aufnahmeseite 16 des Stützrohrs 12 ist wenigstens ein Ausrichtelement 32 angeordnet und an dem Gehäuse 108 ist ein Gegenelement 33 angeordnet, wodurch sowohl eine winkelgerichtete Montage als auch ein Verdrehschutz des im Gehäuse 108 montierten Stützrohrs 12 darstellbar ist. Ein zusätzlicher Verdrehschutz ist über das Verzahnen von Rippen 46 an der Aufnahmeseite 16 des Stützrohrs 12 mit Stegen 44 am Bund 18 der Gehäusewand 112 realisiert.

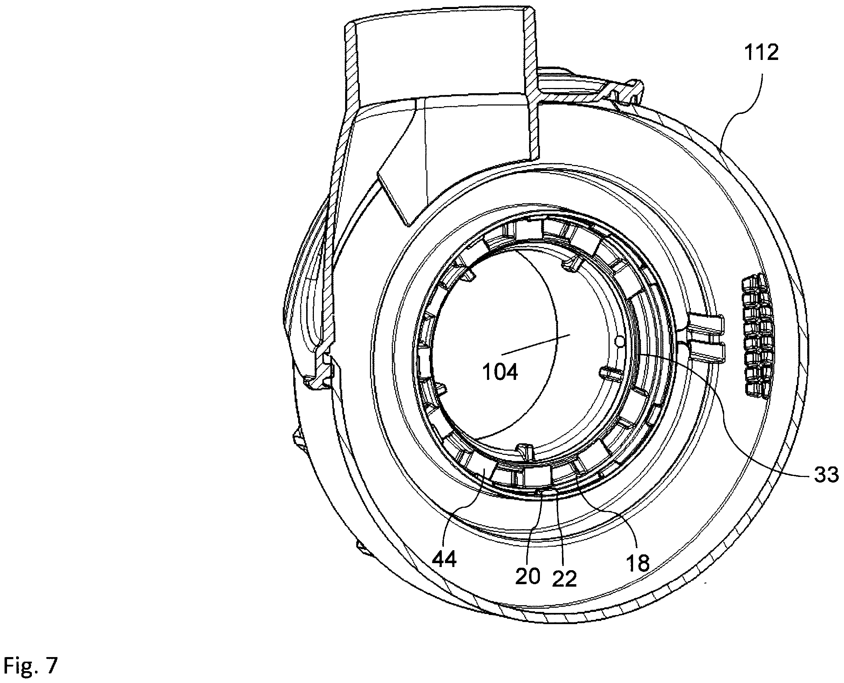

Figur 7 zeigt eine perspektivische Ansicht der Rastelemente 18, 20, 22 des Gehäuses 108 nach einem Ausführungsbeispiel der Erfindung. Die Rastelemente Haltenase 20 mit Haltefläche 22 sind auf einem umlaufenden Bund 18 in regelmäßigen Abständen angeordnet, wobei die Haltenasen 20 an einer Stelle einen größeren Abstand als Gegenelement 33 aufweisen, wo nämlich das Ausrichtelement 32 des Stützrohrs 12 eingreifen kann, um das Stützrohr 12 winkelgerichtet montieren zu können.

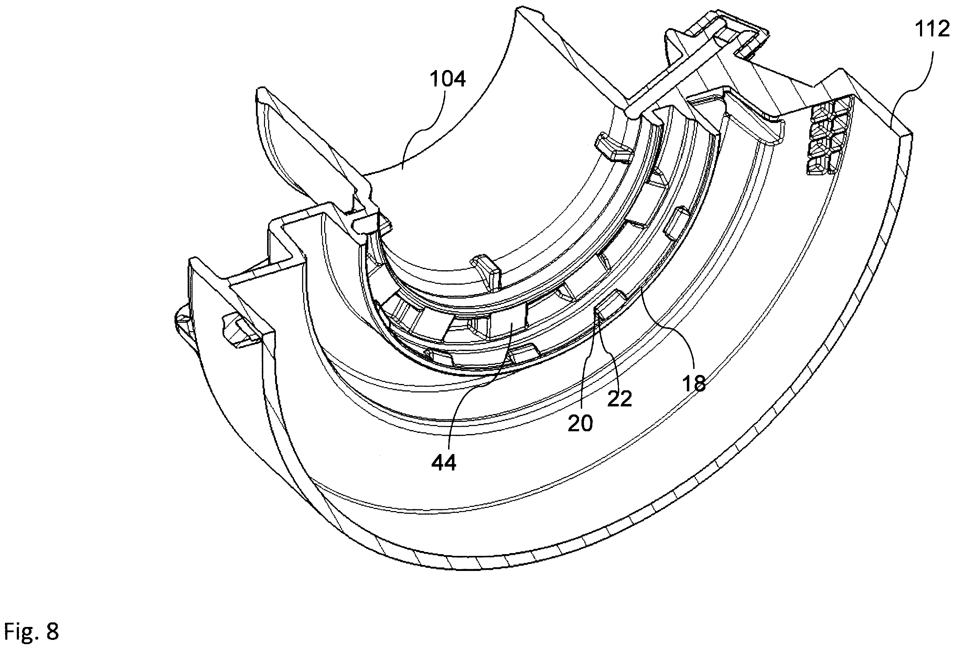

In Figur 8 ist eine weitere perspektivische Detailansicht der Rastelemente 18, 20, 22 des Gehäuses 108 nach einem Ausführungsbeispiel der Erfindung dargestellt, sodass die räumliche Anordnung des Bundes 18 mit den Haltenasen 20 und Halteflächen 22 deutlicher zu erkennen sind.

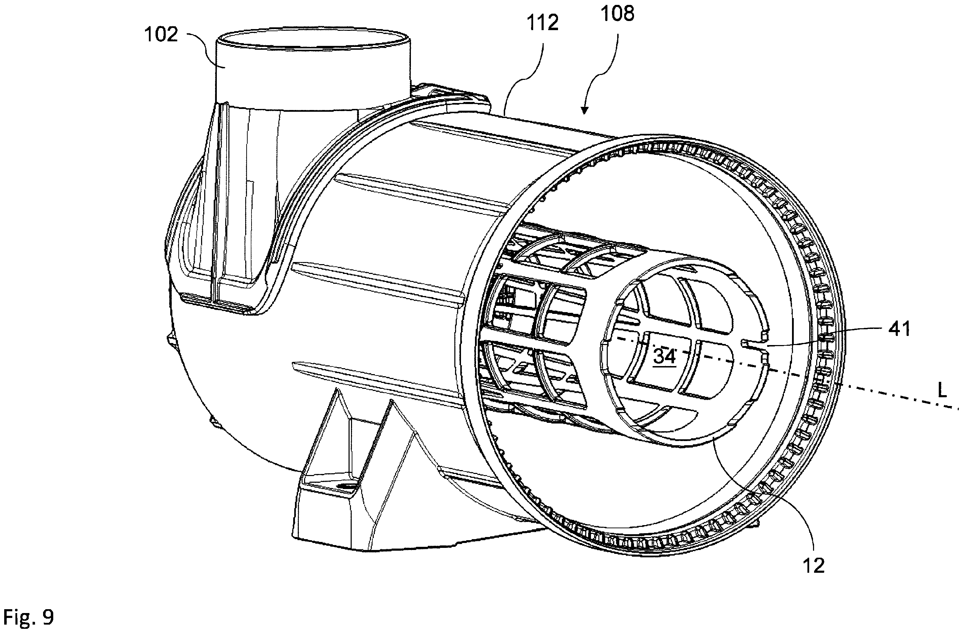

Figur 9 zeigt ein Gehäuse 108 eines Filtersystems 100 mit abgenommenem Deckel 110 und montiertem Stützrohr 12 nach einem Ausführungsbeispiel der Erfindung. Das Stützrohr 12 ist dabei konzentrisch zur Längsachse L des Filtersystems 100 im Inneren der Gehäusewand 112 angeordnet. Das Stützrohr 12 weist an seinem oberen Ende ein Gegenelement 41 zur winkelgerichteten Montage eines Sekundärelements 36 nach dem Poka Yoke-Prinzip auf.

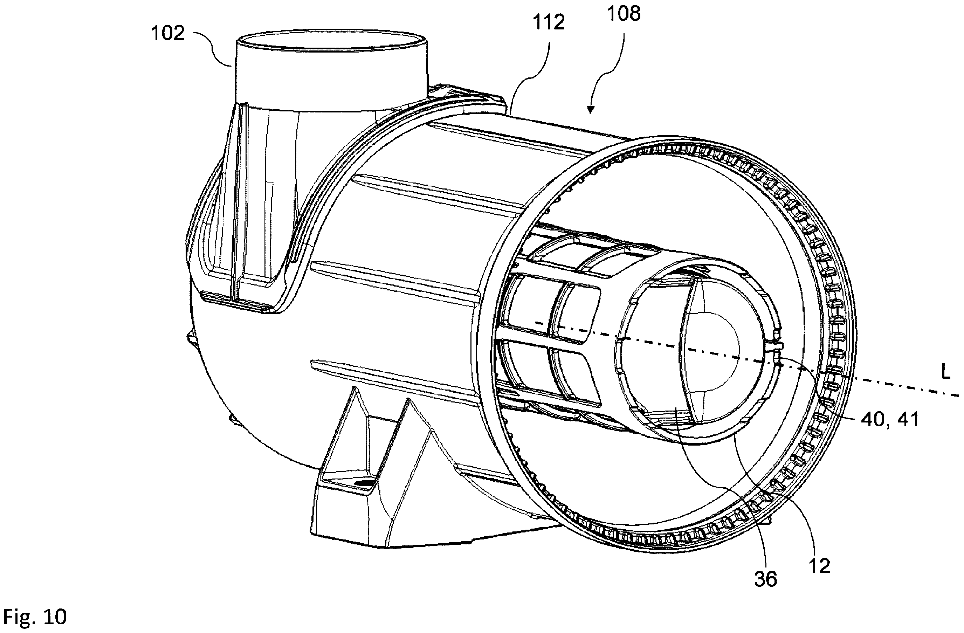

In Figur 10 ist weiter ein Gehäuse 108 eines Filtersystems 100 mit abgenommenem Deckel 110 und montiertem Stützrohr 12 und Sekundärelement 36 nach einem Ausführungsbeispiel der Erfindung dargestellt. Das Sekundärelement 36 ist dabei im Inneren 34 des Stützrohres 12 angeordnet und erstreckt sich entlang der Gehäuseachse L. Das Sekundärelement 36 ist über eine Rastverbindung 38 mit dem Stützrohr 12 und/oder Gehäuse 108 verbunden und über die Verbindung von Ausrichtelement 40 und Gegenelement 41 bezogen auf die Gehäuseachse L und/oder das Stützrohr 12 axial winkelgerichtet montiert.

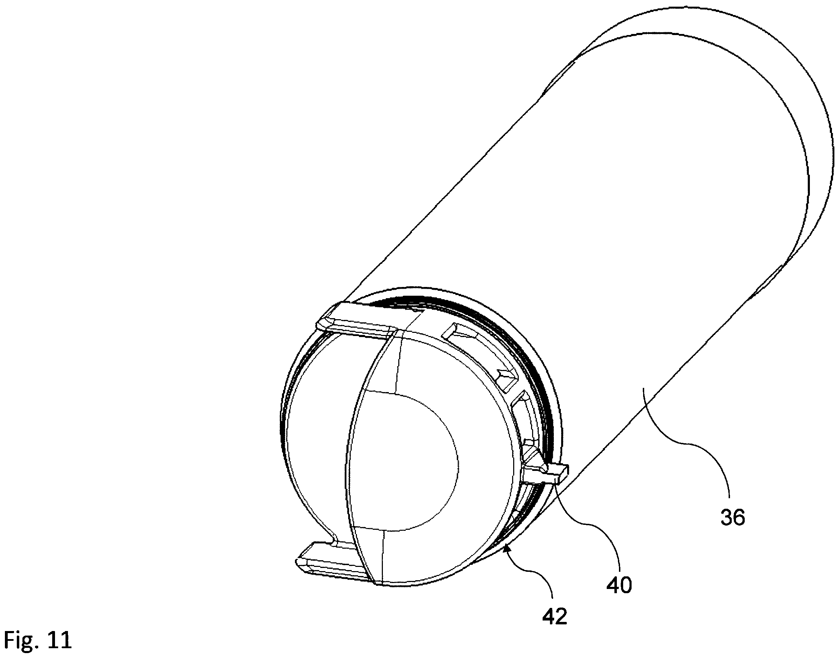

Figur 11 zeigt ein Sekundärelement 36 nach einem Ausführungsbeispiel der Erfindung. Am oberen Ende des Sekundärelements 36 ist als Ausrichtelement 40 zur winkelgerichteten Montage im Stützrohr 12 eine vorspringende Rippe zu erkennen. An einer Aufnahmeseite 42 des Sekundärelements 36 ist wenigstens ein Ausrichtelement 40 angeordnet, wobei ein Gegenelement 41, beispielsweise eine Nut, an dem Stützrohr 12 angeordnet ist, wodurch eine winkelgerichtete Montage sowie ein Verdrehschutz des im Gehäuse 108 und/oder in dem Stützrohr 12 montierten Sekundärelements 36 darstellbar ist.

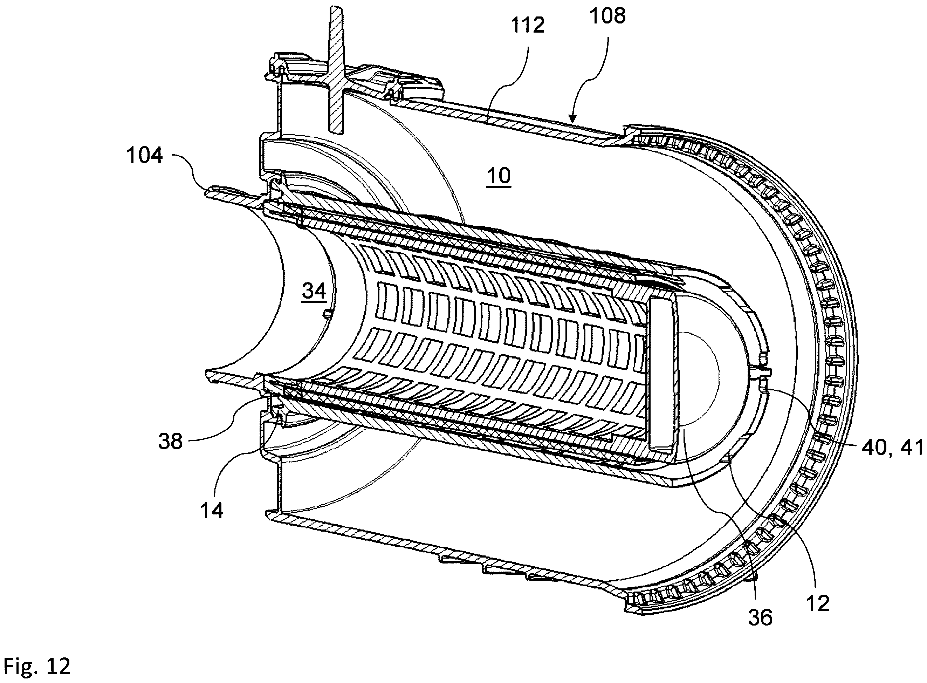

Figur 12 zeigt einen Längsschnitt durch ein Gehäuse 108 eines Filtersystems 100 mit abgenommenem Deckel 110 und montiertem Stützrohr 12 und Sekundärelement 36 nach einem Ausführungsbeispiel der Erfindung. Im Inneren 10 des Filtersystems 100 ist das Stützrohr 12 über eine Rastverbindung 14 an der Gehäusewand 112 oberhalb des Auslassstutzens 104 montiert, während das Sekundärelement 36 im Inneren 34 des Stützrohrs 12 über eine Rastverbindung 38 angeordnet ist, wobei das Sekundärelement 36 über das Ausrichtelement 40, beispielsweise eine Rippe, und sein Gegenelement 41, beispielsweise eine Nut, im Stützrohr 12 winkelgerichtet montiert ist.

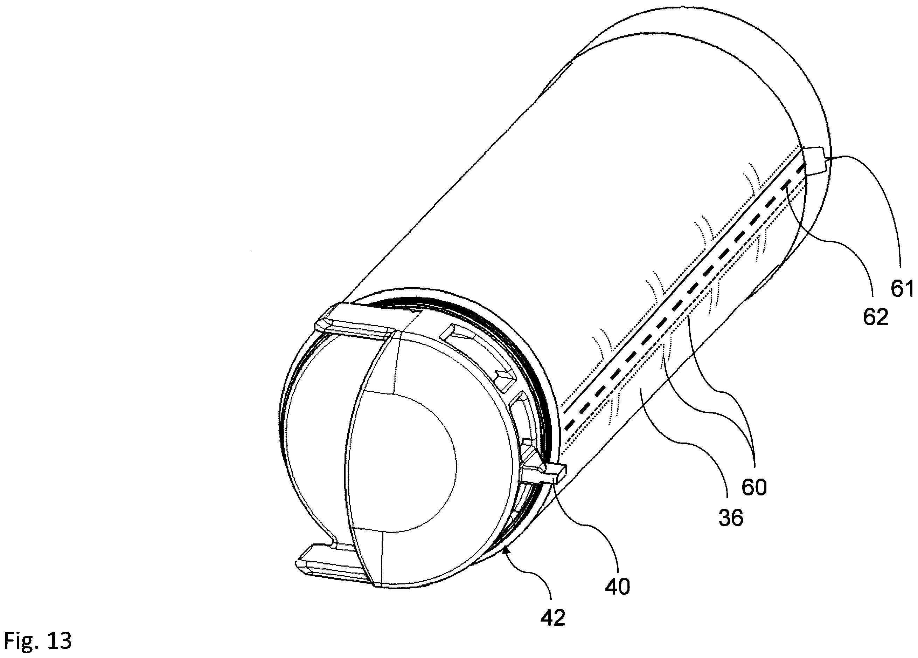

Figur 13 zeigt ein Sekundärelement 36 nach einem Ausführungsbeispiel der Erfindung. Am oberen Ende des Sekundärelements 36 ist als Ausrichtelement 40 zur winkelgerichteten Montage im Stützrohr 12 eine vorspringende Rippe zu erkennen. An einer Aufnahmeseite 42 des Sekundärelements 36 ist wenigstens ein Ausrichtelement 40 angeordnet, wobei ein Gegenelement 41, beispielsweise eine Nut, an dem Stützrohr 12 angeordnet ist, wodurch eine winkelgerichtete Montage sowie ein Verdrehschutz des im Gehäuse 108 und/oder in dem Stützrohr 12 montierten Sekundärelements 36 darstellbar ist. Die Enden eines ringförmig um einen hier gestrichelt teilweise dargestellten, gitterförmigen Stützkörper 60 angeordneten Filtermediums schließen im Nahtbereich 61 aneinander an und sind bevorzugt wir in der Figur schematisch gezeigt dort überlappend angeordnet. Die Enden sind dort mittels einer Ultraschallschweißnaht, einer Klebespur, einer Metallklammer oder anderen Mitteln miteinander verbunden, so dass ein ringförmig geschlossener Filterkörper gebildet ist. Der Nahtbereich 61 ist bevorzugt radial außerhalb, bevorzugt direkt auf einer insbesondere durchgehenden Längsrippe des Stützkörpers 60 angeordnet. Im Fall einer Verbindung mit Ultraschallschweißnaht oder Klebespur kann eine Verschweißung oder Verklebung direkt mit dieser Längsrippe erfolgen. Dies hat den Vorteil, dass die Position der Balgnaht 62 definiert ist, so dass sie nicht willkürlich an verschiedenen Winkelpositionen angeordnet werden kann.

## Patentansprüche

1. Filtersystem (100) umfassend
- ein Gehäuse (108) mit Gehäusewand (112) und wenigstens einem Deckel (110),
- einen am Gehäuse (108) angeordneten Einlassstutzen (102) zum Zuführen eines zu filternden Fluids, insbesondere Luft,
- einen am Gehäuse (108) angeordneten Auslassstutzen (104) zur Ableitung des gefilterten Fluids,
- ein im Inneren (10) des Gehäuses (108) angeordnetes Stützrohr (12) zur Aufnahme eines Filterelements,
wobei das Stützrohr (12) sich entlang einer Gehäuseachse (L) erstreckt und über eine Rastverbindung (14) an einer Aufnahmeseite (16) mit dem Gehäuse (108) bezogen auf die Gehäuseachse winkelgerichtet nur in einer Winkelrichtung montierbar verbunden ist, wobei die Rastverbindung (14) aus korrespondierenden Rastelementen (18, 20, 24, 26) am Gehäuse (108) und am Stützrohr (12) gebildet ist und die Rastelemente (18, 20, 24, 26) so ausgeführt sind, dass jeweils korrespondierende Rastelemente (18, 20, 24, 26) nur auf eine festgelegte Weise miteinander verrastet werden können.

2. Filtersystem nach Anspruch 1, wobei die Rastverbindung (14) nicht zerstörungsfrei lösbar ausgeführt ist.

3. Filtersystem nach einem der vorhergehenden Ansprüche, wobei als Teil der Rastverbindung (14) ein wenigstens segmentweise ausgebildeter umlaufender Bund (18, 24) und wenigstens eine zum Bund (18, 24) gerichtete Haltenase (20, 26) vorgesehen ist.

4. Filtersystem nach Anspruch 3, wobei die Haltenase (20,26) eine Haltefläche (22, 28) aufweist, welche senkrecht zu der Gehäuseachse (L) angeordnet ist.

5. Filtersystem nach einem der vorhergehenden Ansprüche, wobei das Gehäuse (108) als Teil der Rastverbindung (14) auf einem wenigstens segmentweise ausgebildeten umlaufenden Bund (18) wenigstens eine nach innen gerichtete Haltenase (20) mit einer Haltefläche (22) aufweist, welche senkrecht zu der Gehäuseachse (L) angeordnet ist.

6. Filtersystem nach einem der vorhergehenden Ansprüche, wobei das Stützrohr (12) als Teil der Rastverbindung (14) auf einem umlaufenden Bund (24) eine nach außen gerichtete Haltenase (26) mit einer Haltefläche (28) aufweist, welche senkrecht zu der Gehäuseachse (L) angeordnet ist und wobei das Stützrohr (12) ein Sicherungselement (30) aufweist, wodurch ein Sichern der Rastverbindung (14) gegen Lösen bewirkbar ist.

7. Filtersystem nach einem der vorhergehenden Ansprüche, wobei das Stützrohr (12) als Teil der Rastverbindung (14) auf einem umlaufenden Bund (18) wenigstens eine nach innen gerichtete Haltenase (20) mit einer Haltefläche (22) aufweist, welche senkrecht zu der Gehäuseachse (L) angeordnet ist.

8. Filtersystem nach Anspruch 7, wobei das Gehäuse (108) als Teil der Rastverbindung (14) auf einem umlaufenden Bund (24) eine nach außen gerichtete Haltenase (26) mit einer Haltefläche (28) aufweist, welche senkrecht zu der Gehäuseachse (L) angeordnet ist und wobei das Gehäuse (108) ein Sicherungselement (30) aufweist, wodurch ein Sichern der Rastverbindung (14) gegen Lösen bewirkbar ist.

9. Filtersystem nach einem der vorhergehenden Ansprüche, wobei das Stützrohr (12) bezogen auf die Gehäuseachse (L) axial winkelgerichtet montierbar ist.

10. Filtersystem nach einem der vorhergehenden Ansprüche, wobei wenigstens ein Ausrichtelement (32) an der Aufnahmeseite (16) des Stützrohrs (12) angeordnet ist und wobei ein Gegenelement (33) an dem Gehäuse (108) angeordnet ist, wodurch ein Verdrehschutz des im Gehäuse (108) montierten Stützrohrs (12) darstellbar ist.

11. Filtersystem nach einem der vorhergehenden Ansprüche, wobei im Inneren (34) des Stützrohres (12) ein Sekundärelement (36) angeordnet ist und wobei das Sekundärelement (36) sich entlang der Gehäuseachse (L) erstreckt und insbesondere über eine Rastverbindung (38) mit dem Stützrohr (12) und/oder Gehäuse (108) verbindbar ist.

12. Filtersystem nach einem der vorhergehenden Ansprüche, wobei das Sekundärelement (36) bezogen auf die Gehäuseachse (L) und/oder das Stützrohr (12) axial winkelgerichtet montierbar ist.

13. Filtersystem nach einem der vorhergehenden Ansprüche, wobei wenigstens ein Ausrichtelement (40) an einer Aufnahmeseite (42) des Sekundärelements (36) angeordnet ist und wobei ein Gegenelement (41) an dem Stützrohr (12) angeordnet ist, wodurch ein Verdrehschutz des im Gehäuse (108) und/oder in dem Stützrohr (12) montierten Sekundärelements (36) darstellbar ist.

## Claims

1. Filter system (100), comprising
- a housing (108) with housing wall (112) and at least one cover (110),
- an inlet port (102) disposed on the housing (108) for supplying a fluid to be filtered, in particular air,
- an outlet port (104) disposed on the housing (108) for discharging the filtered fluid,
- a support tube (12) disposed inside (10) the housing (108) for accommodating a filter element,
wherein the support tube (12) extends along a housing axis (L) and is connected to the housing (108) via a latching connection (14) on a receiving side (16) so as to be angularly mountable only in one angular direction relative to the housing axis, wherein the latching connection (14) is formed from corresponding latching elements (18, 20, 24, 26) on the housing (108) and on the support tube (12), and the latching elements (18, 20, 24, 26) are designed in such a way that corresponding latching elements (18, 20, 24, 26) can only be latched to one another in a fixed manner.

2. Filter system according to claim 1, wherein the latching connection (14) is not non-destructively detachable.

3. Filter system according to one of the preceding claims, wherein a circumferential collar (18, 24) realized at least segment by segment and at least one locating lug (20, 26) directed towards the collar (18, 24) is provided as part of the latching connection (14).

4. Filter system according to claim 3, wherein the locating lug (20, 26) features a holding surface (22, 28) arranged perpendicularly to the housing axis (L).

5. Filter system according to one of the preceding claims, wherein the housing (108) features, as part of the latching connection (14), on a circumferential collar (18) realized at least segment by segment at least one inwardly directed locating lug (20) with a holding surface (22) which is arranged perpendicularly to the housing axis (L).

6. Filter system according to one of the preceding claims, wherein the support tube (12) features, as part of the latching connection (14), on a circumferential collar (24) an outwardly directed locating lug (26) with a holding surface (28) which is disposed perpendicularly to the housing axis (L) and wherein the support tube (12) features a securing element (30) so that securing of the latching connection (14) against loosening can be achieved.

7. Filter system according to one of the preceding claims, wherein the support tube (12) features, as part of the latching connection (14), on a circumferential collar (18) at least one inwardly directed locating lug (20) with a holding surface (22) which is arranged perpendicularly to the housing axis (L).

8. Filter system according to claim 7, wherein the housing (108) features, as part of the latching connection (14), on a circumferential collar (24) an outwardly directed locating lug (26) with a holding surface (28) which is arranged perpendicularly to the housing axis (L) and wherein the housing (108) features a securing element (30) so that securing of the latching connection (14) against loosening can be achieved.

9. Filter system according to one of the preceding claims, wherein the support tube (12) is axially mountable in an angular manner relative to the housing axis (L).

10. Filter system according to one of the preceding claims, wherein at least one alignment element (32) is disposed on the receiving side (16) of the support tube (12) and wherein a counter element (33) is disposed on the housing (108) so that an anti-rotation device of the support tube (12) mounted in the housing (108) can be represented.

11. Filter system according to one of the preceding claims, wherein a secondary element (36) is disposed in the interior (34) of the support tube (12) and wherein the secondary element (36) extends along the housing axis (L) and in particular can be connected to the support tube (12) and/or to the housing (108) via a latching connection (38).

12. Filter system according to one of the preceding claims, wherein the secondary element (36) is axially mountable in an angular manner relative to the housing axis (L) and/or relative to the support tube (12).

13. Filter system according to one of the preceding claims, wherein at least one alignment element (40) is disposed on a receiving side (42) of the secondary element (36) and wherein a counter element (41) is disposed on the support tube (12) so that an anti-rotation device of the secondary element (36) mounted in the housing (108) and/or in the support tube (12) can be represented.

## Revendications

1. Système de filtre (100), comprenant
- un boîtier (108) avec une paroi de boîtier (112) et au moins un couvercle (110),
- une tubulure d'admission (102) disposée sur le boîtier (108) et destinée à introduire un fluide à filtrer, notamment de l'air,
- une tubulure de sortie (104) disposée sur le boîtier (108) et destinée à évacuer le fluide filtré,
- un tube de support (12) disposé à l'intérieur (10) du boîtier (108) pour recevoir un élément filtrant,
dans lequel le tube de support (12) s'étend le long d'un axe de boîtier (L) et est relié au boîtier (108) par l'intermédiaire d'une liaison par encliquetage (14) sur un côté admission (16) de manière à ne pouvoir être monté angulairement que dans une direction angulaire par rapport à l'axe du boîtier, dans lequel la liaison par encliquetage (14) est formé d'éléments d'encliquetage correspondants (18, 20, 24, 26) sur le boîtier (108) et sur le tube de support (12), et les éléments d'encliquetage (18, 20, 24, 26) sont conçus de telle sorte que les éléments d'encliquetage correspondants (18, 20, 24, 26) peuvent être encliquetés entre eux seulement de manière fixe.

2. Système de filtre selon la revendication 1, dans lequel la liaison par encliquetage (14) n'est pas démontable de manière non destructive.

3. Système de filtre selon l'une des revendications précédentes, dans lequel une collerette périphérique (18, 24) formée au moins de manière segmentée et au moins un ergot de retenue (20, 26) dirigée vers la collerette (18, 24) est prévue en tant que partie de la liaison par encliquetage (14).

4. Système de filtre selon la revendication 3, dans lequel l'ergot de retenue (20, 26) présente une surface de retenue (22, 28) disposée perpendiculairement à l'axe du boîtier (L).

5. Système de filtre selon l'une des revendications précédentes, dans lequel le boîtier (108) présente, en tant que partie de la liaison par encliquetage (14), sur une collerette périphérique (18) formée au moins de manière segmentée au moins un ergot de retenue (20) dirigé vers l'intérieur avec une surface de retenue (22) disposée perpendiculairement à l'axe (L) du boîtier.

6. Système de filtre selon l'une des revendications précédentes, dans lequel le tube de support (12) présente, en tant que partie de la liaison par encliquetage (14), sur une collerette périphérique (24) un ergot de retenue (26) dirigé vers l'extérieur avec une surface de retenue (28) disposée perpendiculairement à l'axe du boîtier (L) et dans lequel le tube de support (12) présente un élément de fixation (30) permettant ainsi la fixation de la liaison par encliquetage (14) afin de la rendre inamovible.

7. Système de filtre selon l'une des revendications précédentes, dans lequel le tube de support (12) présente, en tant que partie de la liaison par encliquetage (14), sur une collerette périphérique (18) au moins un ergot de retenue (20) dirigé vers l'intérieur avec une surface de retenue (22) disposée perpendiculairement à l'axe du boîtier (L).

8. Système de filtre selon la revendication 7, dans lequel le boîtier (108) présente, en tant que partie de la liaison par encliquetage (14), sur une collerette périphérique (24) un ergot de retenue (26) dirigé vers l'extérieur avec une surface de retenue (28) disposée perpendiculairement à l'axe du boîtier (L) et dans lequel le boîtier (108) présente un élément de fixation (30) permettant ainsi la fixation de la liaison par encliquetage (14) afin de la rendre inamovible.

9. Système de filtre selon l'une des revendications précédentes, dans lequel le tube de support (12) peut être monté axialement de manière angulaire par rapport à l'axe du boîtier (L).

10. Système de filtre selon l'une des revendications précédentes, dans lequel au moins un élément d'alignement (32) est disposé sur le côté admission (16) du tube de support (12) et dans lequel un contre-élément (33) est disposé sur le boîtier (108), une protection antitorsion du tube de support (12) monté dans le boîtier (108) étant ainsi représentée.

11. Système de filtre selon l'une des revendications précédentes, dans lequel un élément secondaire (36) est disposé à l'intérieur (34) du tube de support (12) et dans lequel l'élément secondaire (36) s'étend tout le long de l'axe du boîtier (L) et peut notamment être relié au tube de support (12) et/ou au boîtier (108) par une liaison par encliquetage (38).

12. Système de filtre selon l'une des revendications précédentes, dans lequel le l'élément secondaire (36) peut être monté axialement de manière angulaire par rapport à l'axe du boîtier (L) et/ou par rapport au tube de support (12).

13. Système de filtre selon l'une des revendications précédentes, dans lequel au moins un élément d'alignement (40) est disposé sur un côté admission (42) de l'élément secondaire (36) et dans lequel un contre-élément (41) est disposé sur le tube de support (12), une protection antitorsion de l'élément secondaire (36) monté dans le boîtier (108) et/ou dans le tube de support (12) pouvant ainsi être représentée.
